# EUROPEAN PATENT SPECIFICATION

(11) **EP 0 736 677 B1**
(45) Date of publication and mention of the grant of the patent: **07.08.2002**
(21) Application number: 96105456.6
(22) Date of filing: 04.04.1996
(51) Int. Cl.: F01N 3/28, B23K 1/00

(54) **Process and apparatus for production of metallic honeycomb body for supporting a catalyst thereon**
Verfahren und Vorrichtung zur Herstellung eines metallischen Wabenkörpers als Träger eines Katalysators
Procédé et dispositif pour la fabrication des corps métalliques en nid d'abeilles pour supporter catalysateur

(30) Priority: 05.04.1995 JP 8051495
(43) Date of publication of application: 09.10.1996
(73) Proprietor: NIPPON STEEL CORPORATION, Tokyo (JP); TOYOTA JIDOSHA KABUSHIKI KAISHA, Aichi-ken (JP)
(72) Inventor: Yamamoto, Yukihiro, c/o Nippon Steel Corp., Futtsu City, Chiba (JP); Kako, Takuzou, c/o Nippon Steel Corp., Tokai City, Aichi (JP); Yoshida, Kazuo, c/o Nippon Steel Corp., Futtsu City, Chiba (JP); Nakashima, Yuuji, Nippon Steel Corp., Futtsu City, Chiba (JP); Yoshizaki, Kouji, Toyota Jidosha K.K.,, Toyota-shi Aichi (JP); Itou, Takaaki, c/o Toyota Jidosha K.K.,, Toyota-shi, Aichi (JP)
(74) Representative: VOSSIUS & PARTNER

(56) References cited:
- EP-A- 0 263 324
- EP-A- 0 351 841
- PATENT ABSTRACTS OF JAPAN vol. 12, no. 176 (C-498), 25 May 1988 & JP-A-62 282644 (NIPPON RADIATOR CO), 8 December 1987,

## Description

The present invention relates to a process and an apparatus for the production of a metallic honeycomb body, for supporting a catalyst, for use in a catalytic converter for the purification of an exhaust gas discharged from an internal combustion engine and in a catalytic converter in a chemical plant.

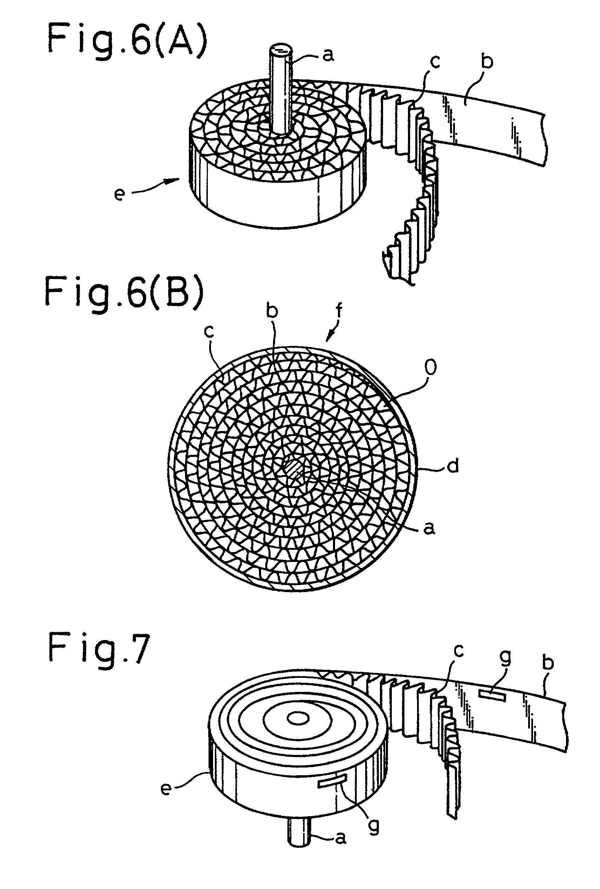

In recent years, a catalytic converter using a metallic honeycomb body as a catalyst carrier, constituted by a stack of metallic foils, has become adopted, for example, in the purification of an exhaust gas discharged from internal combustion engines, particularly automobiles. In this case, as shown in Figs. 6 (A) and (B), a metallic flat foil b and a metallic corrugated foil c, with the flat foil and the corrugated foil stacked on top of the other, are spirally wound on a winding shaft a, thereby forming a honeycomb body e having a large number of through holes o in the direction of the winding shaft, and the honeycomb body e thus obtained is then fitted into a metallic casing d to form a cylindrical metallic carrier f.

In the production of the metallic honeycomb body e, in order that the structural strength is ensured to realize stabilized catalyst carrier functions, it is common practice to braze the flat foil b and the corrugated foil c, constituting the metallic honeycomb body e, to the casing d, thereby integrating the metallic honeycomb body e with the casing d.

An example of conventional methods for joining a flat foil b to a corrugated foil c in the production of a metallic honeycomb body e comprises winding a flat foil b and a corrugated foil c with the flat foil and the corrugated foil stacked on top of the other, fixing the outermost circumferential end of the flat foil b, press-fitting the resultant spiral into a metallic casing d, spreading a powdery brazing metal in the interior of the assembly, heating the assembly to deposit the powdery brazing metal between the corrugated foil and the flat foil and between the metallic honeycomb body and the metallic casing, thereby joining the corrugated foil to the flat foil and, at the same time, joining the metallic honeycomb body to the metallic casing.

This method, however, is disadvantageous in that it is difficult to surely spread and deposit the powdery brazing metal at the sites to be joined, a sure and stable joint cannot be provided, and the cost of the powdery brazing metal is high.

US-A-4 847 966 discloses a method of making a matrix for a catalytic reactor for the purification of exhaust gas in which during winding a metallic flat foil and a metallic corrugated foil a brazing wire or a brazing foil is continuously supplied in indentations provided at the points of the corrugated foil that border on the adjacent layers.

In order to solve the problems above, for example, another jointing method, as shown in Fig. 7, has been proposed. This method comprises providing a brazing foil g, which has been previously cut into a very small piece, for example, a piece having an approximate size of 0.05 mm in thickness x 1 mm in width x 12 mm in length, at predetermined intervals on predetermined positions of the flat foil, connecting the flat foil b and the corrugated foil c to a winding shaft a, which serves also as an electrode, winding them, with the flat foil b and the corrugated foil c stacked on top of the other, on the winding shaft a to form a honeycomb body e having a predetermined dimension, fixing the outermost circumferential end of the flat foil b, fitting the honeycomb body into a metallic casing, and heating the assembly in a vacuum furnace to melt the brazing foil to join the flat foil b, the corrugated foil c, and the metallic casing d to one another.

In the production of a cylindrical metallic honeycomb body e by this method, however, since the wave height and pitch of the corrugated foil c vary, the relative position of the cut brazing foils g varies even when winding is carried out under constant conditions, so that, in some cases, the joint sites between the flat foil b, the corrugated foil c and the metallic casing d are often shifted from a predetermined joint site region.

The brazing foil g used herein functions to join the flat foil b, the corrugated foil c, and the metallic casing d to one another. When the metallic honeycomb body e is incorporated into an electric heating type catalytic converter to permit a current to flow across the winding shaft a and the metallic casing d to heat the metallic foils per se, thereby enabling the temperature of the metallic honeycomb body to be raised to the catalytic activation temperature in a short time, the brazing foil g functions also to form joints which can be energized.

For this reason, the shift of the sites of joints by the brazing foil from the predetermined region gives rise to problems such as lowered joint strength, deviation of a heat pattern created by energization to cause a failure of heat to be generated, leading to a deterioration in the above functions of the metallic honeycomb body and a lowering in dimensional accuracy. This in turn results in lowered yield of acceptable honeycomb body products and, hence, lowers the productivity of the metallic honeycomb body (see Japanese Unexamined Patent Publication (Kokai) No. 179939/1993).

In view of the above, an object of the present invention is to surely feed a brazing foil into desired sites between a corrugated foil and a flat foil.

Another object of the present invention is to join a corrugated foil and a flat foil with the aid of a brazing foil at the optimal sites, enabling a strong catalyst carrier to be produced.

A further object of the present invention is to produce a catalyst carrier which can be heated in a short time to a temperature at which a catalyst supported on a metallic honeycomb body is activated.

A still further object of the present invention is to provide a production process and an apparatus which can stably produce a metallic honeycomb body with good productivity.

The above objects of the present invention can be attained by the following process and apparatus.

These objects are achieved with the features of claims 1 and 6, respectively.

A method and an apparatus for determining the above desired joint sites will be described. For example, an angle detector is provided which detects the number of turns + angle x (desired angle) from the origin defined as a joint starting point at which the front ends of the flat foil and the corrugated foil are joined to the winding shaft. Separately, angles from the origin (total number of turns + angle x), at which each brazing foil is inserted into each layer, are preset in a setter. When the total number of turns and angle detected by the angle detector have coincided with the preset number of turns and angle, a brazing foil inserting device provided with a drive control device is operated to insert a brazing foil into a predetermined site between the flat foil and the corrugated foil.

The above insertion means, unlike the prior art, can reduce the influence of a variation in the wave height and pitch of the corrugated foil and effectively prevent the occurrence of a failure of jointing and heat generation. Further, since the site for the insertion of a brazing foil is regulated by an angle to reduce a cumulative error, the relative positioning accuracy for joint can be stably ensured within a specified range even though the wave height and pitch of the corrugated foil has varied. This reduces the variation in quality of honeycomb bodies, markedly improves the yield, and, at the same time, enables the production of the honeycomb body to be automated. Further, the step of mounting a cut brazing foil on the corrugated foil or the flat foil prior to winding can be eliminated, resulting in improved productivity of the metallic honeycomb body.

Other features and benefits of the present invention will be fully understood from the following description with reference to the accompanying drawing.

A preferred form of the present invention is illustrated in the accompanying drawings in which:
Fig. 1 is a plan view showing a fundamental concept of one embodiment of the present invention;
Fig. 2 is a partially enlarged plan view showing an example of arrangement of sites of joints by a brazing foil in the embodiment shown in Fig. 1;
Fig. 3 is a plan view showing a concept of setting of a brazing foil inserting site in the present invention;
Fig. 4 is a perspective view showing one embodiment of a brazing foil inserting device according to the present invention;
Fig. 5 (A) is a plan view showing one example of arrangement of joints in a metallic honeycomb body prepared in a working example of the present invention, and Fig. 5 (B) is a plan view showing another example of arrangement of joints in a metallic honeycomb body;
Fig. 6 (A) is a perspective view showing the conventional process for producing a metallic honeycomb body, and Fig. 6 (B) is a plan view showing the conventional metallic honeycomb body; and
Fig. 7 is a perspective view showing an example of joint by a brazing foil in the conventional metallic honeycomb body.

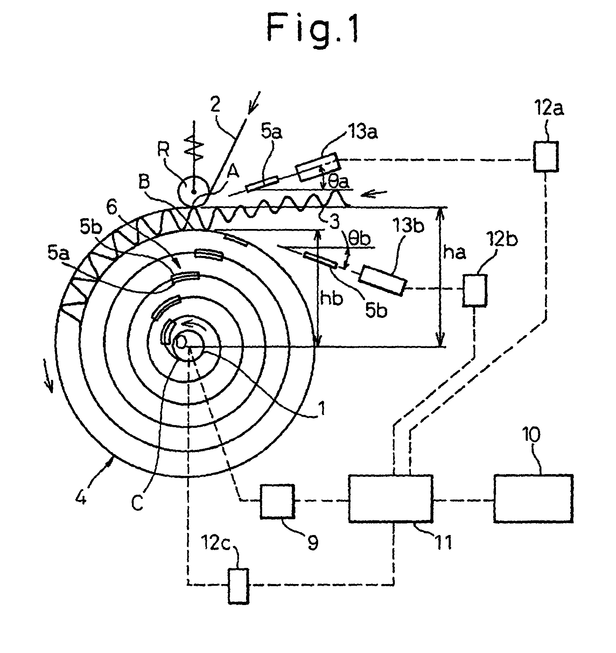

The present invention will be described in more detail with reference to the accompanying drawings. Fig. 1 is a schematic view showing an embodiment of the present invention. In this embodiment, a metallic honeycomb body used in an electric heating type catalytic converter is formed.

Specifically, in the above catalytic converter, a brazing foil for joining a flat foil and a corrugated foil to each other has an electrical conducting function and is disposed while leaving a predetermined distance from the preceding brazing foil for each turn of layer so that an electric passage is provided between a central electrode in a rod form provided in the center of the metallic honeycomb body and an external electrode as a cylindrical casing for housing the metallic honeycomb body. As shown in Figs. 6 (A) and (B), the above metallic honeycomb body is in a cylindrical form prepared by spirally winding a strip of a corrugated foil and a strip of a flat foil together, with the corrugated foil and the flat foil stacked on top of the other, on a winding shaft.

In Fig. 1, the front ends of a flat foil 2 and a corrugated foil 3 are joined to a winding shaft 1, and the winding shaft 1 is turned with a certain tension applied the flat foil and the corrugated foil to spirally wind the flat foil 2 and the corrugated foil 3, thereby forming a cylindrical metallic honeycomb body 4. In this case, for each foil layer formed in the radial direction, foils 5a, 5b cut into a predetermined length are inserted respectively into point A at which the inner surface of the flat foil 2 comes into contact with the outer surface of the corrugated foil 3 and point B at which the outer surface of the flat foil 2 comes into contact with the inner surface of the corrugated foil 3.

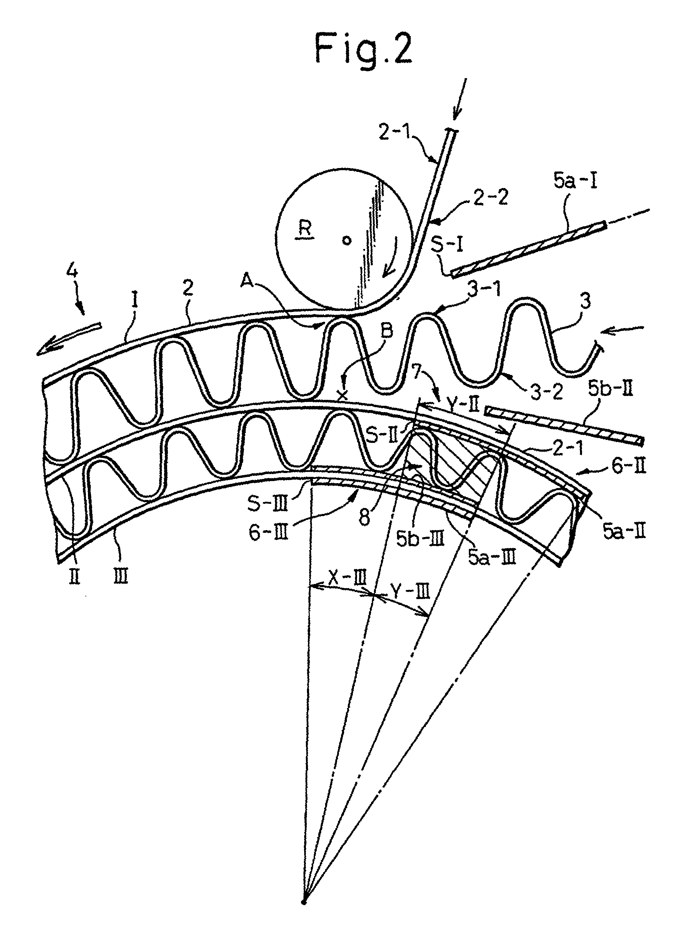

Details of the state of insertion of the brazing foil between the flat foil and the corrugated foil are shown in Fig. 2. In the drawing, brazing foils 5aIII, 5bIII are inserted respectively into the inner and outer surfaces of the flat foil 2 in a joint 6III of a metallic foil layer III, and, in a joint 6II of a metallic foil layer II, a brazing foil 5aII is inserted into the inner surface of the flat foil 2 in its position shifted by an angle XIII from a starting end SIII of the joint 6III. Therefore, the joint 6III overlaps with the joint 6II in a region defined by an angle YIII of the joint 6III.

Further, after the brazing foil 5aII is inserted at the point A, the metallic honeycomb body 4 is turned by 360° in a direction indicated by an arrow, and, when the starting point SII of the brazing foil 5aII has reached the point B, a brazing foil 5bII is inserted by means of a brazing foil inserting device 13b into between the inner surface 3-2 of the corrugated foil 3 and the outer surface 2-1 of the flat foil 2. Similarly, when the metallic honeycomb body is turned by an angle XI (not shown), a brazing foil 5aI is inserted by means of the brazing foil inserting device 13a into point A at which the outer surface 3-1 of the corrugated foil 3 comes into contact with the inner surface 2-2 of the flat foil 2. Further, when the metallic honeycomb body is turned by 360° so that the starting end SI of the brazing foil 5aI reaches the point B, a brazing foil 5bI is inserted.

Thus, the brazing foils 5a and 5b are disposed, on both sides of the flat foil 2, symmetrically about the flat foil and while shifting the joint site at given intervals for each metallic foil layer.

As described above, in this embodiment, since the metallic honeycomb body is used as a catalyst carrier in an electric heating type catalytic converter, the arrangement of joints 6 by the brazing foils 5a and 5b should be such that a predetermined overlap 7 should be provided between adjacent joints in the radial direction to accurately form an electric passage 8.

For this purpose, in the present invention, the turning of the metallic honeycomb body by a predetermined angle and the insertion of the brazing foil are carried out using the following apparatus.

Fig. 1 is a schematic diagram showing an embodiment of an apparatus which can accurately handle a brazing foil and insert the brazing foil into a predetermine site between a flat foil and a corrugated foil.

In the drawing, an angle detector 9 connected to the winding shaft 1 detects, in the course of winding the flat foil 2 and the corrugated foil 3, the number of turns of the flat foil 2 and the corrugated foil 3 from an origin, for example, a winding starting point c, and the angle of the flat foil 2 and the corrugated foil 3 from the origin, caused by turning the winding shaft 1.

The angle detector 9 communicates with a setter 10 through a computing unit 11. In the setter 10, sites into which the brazing foils 5a, 5b are to be inserted are preset in terms of the angle from the origin C (total number of turns + angle X), and the preset values are previously input into the computing unit 11.

The total number of turns and angle signals detected by the angle detector are input into the computing unit 11, and the input values are compared with the preset number of turns and angle X which have been input into the computing unit 11. When the values from the angle detector 9 coincide with those from the setter, the computing unit 11 transmits signals to drive control devices 12a, 12b, 12c. The drive control device 12c transmits signals to a drive unit for the winding shaft. This stops the turning of the winding shaft 1 and operates brazing foil inserting devices 13a, 13b to insert brazing foils 5a, 5b, which have been previously cut into a predetermined size, into predetermined sites between the flat foil 2 and the corrugated foil 3 being in a stopped state. Upon the completion of the insertion of the front end of the brazing foils, the winding shaft 1, in response to signals from the drive control device 12c, begins to turn, inserting and disposing the brazing foils in the predetermined sites.

Since the brazing foil insertion site varies from layer to layer, the inserting devices 13a, 13b are designed so that distances from the center of the winding shaft 1 to the insertion site, ha and hb, and oblique angles for insertion, θa and θb, are variable. In the setter 10, operating conditions for the inserting devices 13a, 13b are preset according to the brazing foil insertion site in each layer, and the inserting devices 13a, 13b are controlled according to the preset operating conditions through the computing unit 11 and the drive control devices 12a, 12b, 12c.

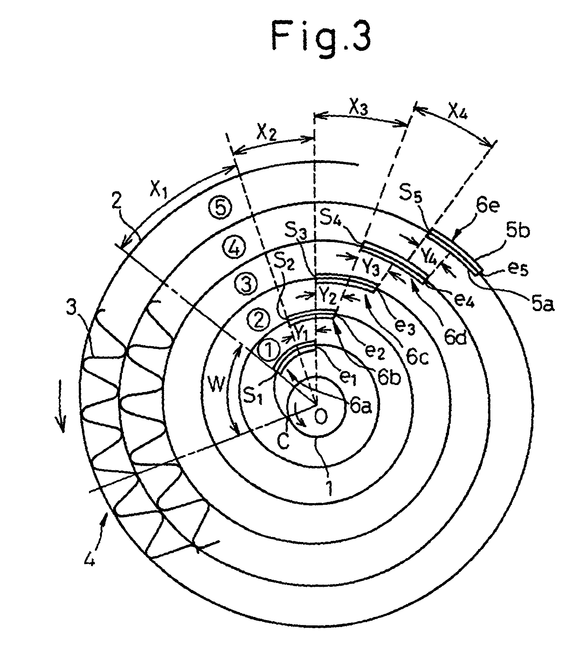

The insertion of the brazing foil will be further described with reference to Fig. 3.

Fig. 3 is a conceptual diagram showing setting of brazing foil insertion sites, points A and B, for each layer in an embodiment where the length of the brazing foils 5a and 5b is constant and an overlap, having a given width y, for constituting an electric passage is formed between adjacent joints in the radial direction.

At the outset, the insertion of a brazing foil 5a at point A will be described.

A joint C where a flat foil and a corrugated foil are joined to a winding shaft 1 is regarded as the origin, and a brazing foil 5a is inserted by means of an inserting device 13a into layer (1) so that a starting end S1 is located at an angle W, thereby forming a joint 6a.

Next, a joint 6b is formed in layer (2). In this case, a starting end S2 of a brazing foil in a joint 6b, for layer (2), which is positioned outside and adjacent to the joint 6a in the layer (1) in the radial direction, is located at a position of (360° + X₁°) with the starting end S1 of the brazing foil in the joint 6a as the starting point, thereby forming an overlap having a width y₁, for constituting an electric passage, between a terminal e₁ of the brazing foil in the joint 6a in the layer (1) and the starting end of the brazing foil in the joint 6b in the layer (2).

The starting end of a brazing foil in a joint 6c, which is positioned outside and adjacent to the joint 6b in the layer (2) in the radial direction, is located at a position of (360° + X₂°) with the starting end of the brazing foil in the joint 6b as the starting point, thereby forming an overlap having a width y₂, for constituting an electric passage, between a terminal e₂ of the brazing foil in the joint 6b and the starting end of the brazing foil in the joint 6c.

The starting end of a brazing foil in a joint 6d in a layer (4), which is positioned outside and adjacent to the joint 6c in the layer (3) in the radial direction, is located at a position of (360° + X₃°) with the starting end of the brazing foil in the joint 6c as the starting point, thereby forming an overlap having a width y₃, for constituting an electric passage, between a terminal e₃ of the brazing foil in the joint 6c and the starting end of the brazing foil in the joint 6d.

The starting end of a brazing foil in a joint 6e in a layer (5), which is positioned outside and adjacent to the joint 6d in the layer (4) in the radial direction, is located at a position of (360° + X₄°) with the starting end of the brazing foil in the joint 6d as the starting point, thereby forming an overlap having a width y₄, for constituting an electric passage, between a terminal e₄ of the brazing foil in the joint 6d and the starting end of the brazing foil in the joint 6e.

Thus, conditions for disposition of a brazing foil in each layer are set.

In the course of winding of the flat foil 2 and the corrugated foil 3 on the winding shaft 1, when the total number of turns and the angle x from the origin C detected by the angular detector 9 have reached the above present values, the brazing foil 5a is inserted for each layer. The angle detector 9 is of a type which can record the history of a total angle from the origin C, preventing the accumulation of angle errors.

Although the insertion of the brazing foil 5a at the point A has been described above, the insertion of the brazing foil 5b at the point B can be done in the same manner as described above in connection with the insertion at the point A, except that the inserting device 13b is used.

In this embodiment, however, the following points should be noted. The point A is located at a position which is different by approximately one turn from the position of the point B. Further, for the point A, the insertion site is on the inner surface side of the flat foil, while for the point B, the insertion site is on the outer surface side of the flat foil. Furthermore, the insertion at the point A is different from the insertion at the point B also in the insertion angle θb and the distance hb from the center of the winding shaft. For this reason, the inserting device may be designed so that operating conditions for the insertion of the brazing foil at the point A may be set separately from those for the insertion of the brazing foil at the point B and the operation for the insertion of the brazing foil at the point A and the operation for the insertion of the brazing foil at the point B are controlled through interlocking with the operation of the winding mechanism.

Thus, the production of a metallic honeycomb body and the operations associated therewith may be easily automated by interlocking the mechanism for winding the flat foil and the corrugated foil, the drive control circuit for the drive mechanism of the brazing foil insertion mechanism, and the computing circuit for drive conditions, and controlling individual drive mechanisms in an interlocked manner through the computing circuit according to the conditions for the casing and the metallic honeycomb body.

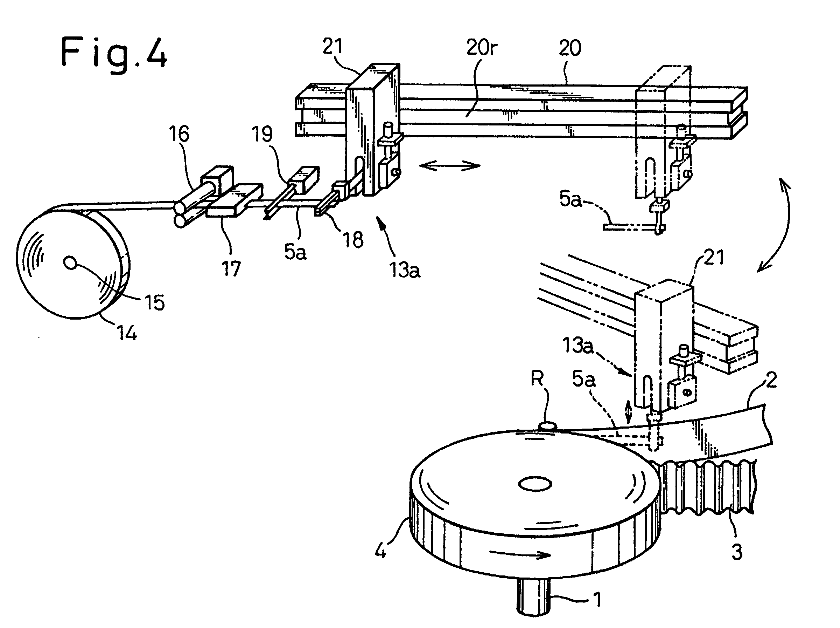

An embodiment of an inserting mechanism used for the insertion of a brazing foil in the present invention is shown in Fig. 4. Specifically, Fig. 4 shows an inserting device 13a for inserting a brazing foil 5a.

In Fig. 4, a brazing foil coil 14 is rotatably supported on a support shaft 15. The front end of the brazing foil coil 14 is sandwiched and supported between pinch rolls 16 and fed, to a predetermined length through a delivery guide 17 into a holding jig 18 for holding the front end of the brazing foil.

A foil cutter 19 is provided in the vicinity of the delivery guide 17. The front end of the brazing foil coil 14 is held with the holding jig 18 by taking advantage of very small force, and, in this state, the brazing foil coil is cut with the brazing foil cutter 19 into a predetermined length. The holding jig 18 is supported rotatably and vertically movably on a movable body 21. The movable body 21 is moved on a track 20r of a support 20. In the present invention, the holding jig 18 and the movable body 21 constitute an inserting device 13a.

Support 20 is rotatably supported in the horizontal direction by a rotating device (not shown) so that the track 20r formed on the support 20 may be horizontally varied in position relative to the winding shaft 1.

The holding jig 18, in response to an instruction from the drive control device 12a, holds a brazing foil 5a, which has been cut with the brazing foil cutter 19, and, together with the movable body 21, moves on the track 20r. In the course of the movement, the holding jig 18 is rotated so that the foil in a horizontal state is brought to a vertical state, and, at the same time, the support 20 is rotated in the horizontal direction to place the brazing foil 5a above a position in the vicinity of the position where the flat foil 2 and the corrugated foil 3 come into contact with, and are stacked on top of, each other.

Thereafter, in response to an instruction, from the drive control device 12a, for inserting the brazing foil, the holding jig 18 is allowed to descend to place the brazing foil 5a in a predetermined position between the flat foil 2 and the corrugated foil 3, and, at the same time, the movable body 21 is slightly moved to a point of contact between the flat foil 2 and the corrugated foil 3 to insert the brazing foil 5a into the point of contact between the flat foil 2 and the corrugated foil 3. The inserted brazing foil 5a is pulled toward the winding direction and wound together with the flat foil 2 and the corrugated foil 3. Since the holding jig 18 lightly holds the brazing foil 5a, there is no fear of the brazing foil 5a being broken upon the application of tension.

After the insertion of the brazing foil 5a, the holding jig 18 is allowed to ascend, and the support 20 is rotated and returned to its original position. Further, the movable body 21 is returned to the position for holding a brazing foil. During this period, the holding jig 18 is rotated and returned to the original position for holding a brazing foil and brought to a state ready for receipt, holding and insertion of a brazing foil which is next fed.

The above steps constitute one cycle of operations for inserting the brazing foil 5a.

The insertion of the brazing foil 5b can be done in the same manner as described above, except that the brazing foil inserting device 13b is used.

The operations of the elements constituting the brazing foil inserting mechanism, such as the rotation of the pinch rolls 16, the holding, rotation, and vertical movement of the holding jig 18, the operation of the brazing foil cutter 19, the movement of the movable body 21, and rotation of the support 20, are performed by drive units such as motors and pneumatic mechanisms. These operations should be timely performed in connection with the operation of the winding shaft. For this reason, the brazing foil inserting mechanism is controlled, by the mechanism shown in Fig. 1, through an interlock with the operation of the winding shaft.

The timing for the insertion of the brazing foil is determined by conditions including the dimension of the metallic honeycomb body, the dimensions of the flat foil and the corrugated foil for forming the metallic honeycomb body, the dimension of the brazing foil, the winding speed, and the joint interval. When the brazing foil is inserted at short intervals, the insertion cycle time should be shortened. Since, however, the shortening of the insertion cycle time is limited from the viewpoint of the mechanism, provision of a plurality of inserting mechanisms should also be considered.

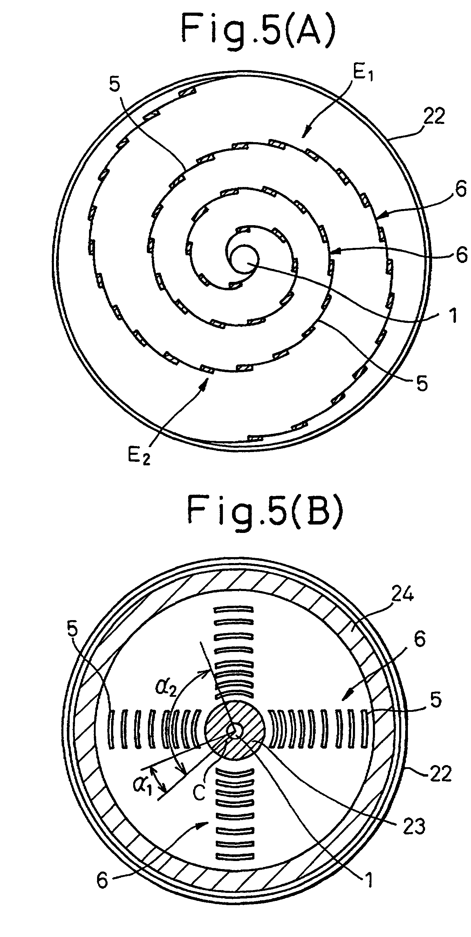

Although the present invention has been described above with reference to an embodiment wherein, in the formation of a metallic honeycomb body using a strip of a flat foil and a strip of a corrugated foil, brazing foils 5a are intermittently inserted so as to partially overlap with each other, thereby providing joints which continuously provide the electrical conducting function (electrical conducting passage) in the direction of diameter of the metallic honeycomb body, it is not limited to this embodiment. For example, as shown in Fig. 5 (A), two electric passages E1, E2 may be provided to further shorten the time taken for the activation of a catalyst. Further, when a plurality of strips of flat foils and corrugated foils are wound to form a metallic honeycomb body, the brazing foil may be inserted for each strip.

Furthermore, the present invention may be used for the production of a metallic honeycomb body of a type which is not incorporated in an electric heating type catalytic converter.

For example, in the insertion of a brazing foil 5 into a joint site 6, as shown in Fig. 5 (B), in order to join the flat foil and the corrugated foil to each other for constituting a metallic honeycomb body, data on sites for the insertion of the brazing foil are previously input into a setter, the winding angle to the winding origin C is detected with an angle detector, and, when each layer for constituting the metallic honeycomb body has reached the preset angle α₁, α₂ or the like, signals for driving are transmitted to the brazing foil inserting device to successively insert the brazing foil in the above sites. This enables desired joint sites to be surely formed. Numeral 23 designates an inner layer joint, and numeral 24 an outer layer joint.

Thus, in the present invention, in the course of winding of a flat foil 2 and a corrugated foil 3 into a spiral form to produce a cylindrical honeycomb body, a brazing foil can be inserted into predetermined sites between the flat foil and the corrugated foil with a good accuracy. This enables honeycomb bodies, free from a variation in quality, to be stably produced and, hence, can improve the yield, thus resulting in improved productivity.

In order to demonstrate the above effects of the present invention, the results of an experiment on the purification of an automobile exhaust gas by an electric heating type catalytic converter using a metallic honeycomb body, produced by the process of the present invention, as a catalyst carrier, together with the results of a comparative experiment using the conventional metallic honeycomb body, are summarized in Table 1.

The honeycomb body used in this experiment was as shown in Fig. 5 (A), that is, one produced by spirally winding a strip of a flat foil 2 and a strip of a corrugated foil 3, with the flat foil 2 and the corrugated foil 3 stacked on top of the other, on a winding shaft (a central electrode) 1 into a cylindrical form. The honeycomb body thus obtained was inserted into a casing (an external electrode) 22. All the brazing foils 5 for forming joints 6, which can be energized, inserted between the flat foil 2 and the corrugated foil 3 had the same dimension and were disposed so that the distances between joints in the circumferential direction were constant.

### Honeycomb body

Outer diameter: 85 mm
Central electrode (material: ferritic stainless steel)
   Diameter: 8 mm
Corrugated foil (material: ferritic stainless steel)
   Width: 20 mm, thickness: 0.05 mm, wave height: 1.25 mm, wave pitch: 2.5 mm
Flat foil (material: ferritic stainless steel)
   Width: 20 mm, thickness: 0.05 mm
Brazing foil
   Width: 1 mm, thickness: 0.05 mm, length: 12 mm
Width of overlap between joints: 4 mm
Winding speed: 5 m/min
Insulating material: oxide foil

As shown in Table 1, for the honeycomb body of an example of the present invention, the error of the distance between adjacent joints relative to the preset value was very small, the width of the overlap between adjacent joints in the radial direction was uniform, and the variation in electric resistance was small.

On the other hand, for the conventional honeycomb body produced by mounting a brazing foil, which has been previously cut into a predetermined length, on both sides of the flat foil so that the mounted brazing foils are symmetrical about the flat foil, and spirally winding the flat foil and the corrugated foil with the flat foil and the corrugated foil stacked on top of the other, slippage occurred in the course of winding. Due to this unfavorable phenomenon, the width of the overlap between adjacent joints in the radial direction was not uniform, the number of joints which do not overlap with an adjacent joint in the radial direction was not small, and the variation in electric resistance was much larger than that in the case of the honeycomb body of the present invention.

**Table 1**

| | Distance between joints, variation±% | Width y of overlap, variation±% | Variation in electric resistance, % |
|---|---|---|---|
| Ex. | ±1.5 | 2 | 2 |
| Comp.Ex. | 20 | 25 | 25 |
| Note) Comp.Ex.: The joints were formed by previously mounting a brazing foil onto the flat foil. | | | |

Although the invention has been described in its preferred form with a certain degree of particularity, it should be understood that the present disclosure of the preferred form can be changed in the details of construction and the combination and arrangement of parts without departing from the scope of the invention as hereinafter claimed.

## Claims

1. A process for producing a metallic honeycomb body (4) for supporting a catalyst useable for an electric heating type catalytic converter, comprising the steps of: spirally winding a metallic flat foil (2) and a metallic corrugated foil (3) together, with the metallic flat foil stacked on the metallic corrugated foil, on a winding shaft (1); in the course of winding, inserting and enfolding a first brazing foil (5b), previously cut into a predetermined length, at a first position where the metallic corrugated foil (3) begins to come into contact with the outer surface (2-1) of previously wound metallic flat foil; inserting and enfolding a second brazing foil (5a), previously cut into that predetermined length, between the outer surface (3-1) of the metallic corrugated foil and the inner surface (2-2) of the metallic flat foil at a second position displaced from said first position along the circumferential length of the wound body by a circumferential arc shorter than said predetermined length, and thus joining the inner and outer sides of the metallic corrugated foil to metallic flat foil in each layer of the spirally wound metallic honeycomb body.

2. The process according to claim 1, wherein a brazing foil (5b-II) is inserted into between the inner surface (3-2) of the metallic corrugated foil (3) and the outer surface (2-1) of the metallic flat foil at a position substantially identical to the position where the brazing foil (5a-II) is inserted into between the outer surface of the metallic corrugated foil and the inner surface of the metallic flat foil, thereby forming a joint between the metallic corrugated foil and the metallic flat foil.

3. The process according to claim 1 or 2, wherein the position for inserting the brazing foil is preset as a desired position for each layer in the metallic honeycomb body.

4. The process according to any of claims 1 to 3, comprising the steps of: presetting in a setter a brazing foil insertion site, for each layer in a spiral form, in terms of an angle from the winding start point in the winding shaft (1); detecting a winding angle, for winding the metallic foil, by means of an angle detector and inputting detected signals into a computing unit; comparing the detected signals with preset signals previously input from the setter; transmitting signals to a drive control device when the detected signals coincide with the preset signals; and, in response to the signals, driving a first brazing foil inserting device through the drive control device to insert and enfold the first brazing foil (5a-I); and driving a second brazing foil inserting device through the drive control device to insert and enfold the second brazing foil (5b-II).

5. The process according to any of claims 1 to 4, in which the joined portions are used as an electric passage between the metallic corrugated foil (3) and the metallic flat foil (2).

6. An apparatus for the production of a metallic honeycomb body (4) for supporting a catalyst usable for an electric heating type catalytic converter, comprising: a winding shaft (1) on which a metallic corrugated foil (3) and a metallic flat foil (2) are wound together, with the metallic flat foil stacked on the metallic corrugated foil, to form a metallic honeycomb body in a spiral form; an angle detector for detecting an angle from the winding start point of the winding shaft (1); a setter for presetting a brazing foil insertion site, for each layer in a spiral form, in terms of an angle from the winding start point of the winding shaft; a computing unit for receiving detected signals from the angle detector and preset signals from the setter and comparing the detected signals with the preset signals; a first brazing foil inserting device driven through a drive control device in response to signals from the computing unit for inserting and enfolding a first brazing foil (5b-II), previously cut into a predetermined length, at a first position where the metallic corrugated foil (3) begins to come into contact with the outer surface (2-1) of previously wound metallic flat foil; and a second brazing foil (5a-I) inserting device driven through the drive control device in response to signals from the computing unit for inserting and enfolding a second brazing foil, previously cut into that predetermined length, between the outer surface (3-1) of the metallic corrugated foil and the inner surface (2-2) of the metallic flat foil at a second position displaced from said first position along the circumferential length of the wound body by a circumferential arc shorter than said predetermined lenght and, thus joining the inner and outer sides of the metallic corrugated foil to metallic flat foil in each layer of the spirally wound metallic honeycomb body.

7. The apparatus according to claim 6, wherein each brazing foil inserting device comprises: a holding jig (18) for holding a cut brazing foil; and a movable body (21) for rotatably or vertically movably supporting the holding jig.

## Patentansprüche

1. Verfahren zum Herstellen eines metallischen Wabenkörpers (4) zum Tragen eines Katalysatorstoffs, der für einen elektrisch geheizten Katalysator verwendbar ist, mit den Schritten: spiralförmiges, gemeinsames Wickeln einer metallischen, flachen Folie (2) und einer metallischen, gewellten Folie (3), wobei die metallische, flache Folie schichtförmig auf der metallischen, gewellten Folie angeordnet wird, auf eine Wickelwelle (1), im Laufe des Wickelns erfolgendes Einführen und Einwickeln einer ersten Lötfolie (5b), die vorab zu einer vorgegebenen Länge geschnitten wurde, an einer ersten Position, wo die metallische, gewellte Folie (3) in Kontakt mit der Außenfläche (2-1) der zuvor gewickelten metallischen, flachen Folie zu kommen beginnt, Einführen und Einwickeln einer zweiten Lötfolie (5a), die vorab zu dieser vorgegebenen Länge geschnitten wurde, zwischen der Außenfläche (3-1) der metallischen, gewellten Folie und der Innenfläche (2-2) der metallischen, flachen Folie an einer zweiten Position, die in Umfangsrichtung des gewickelten Körpers um einen Umfangsbogen, der kürzer als die vorgegebene Länge ist, gegenüber der ersten Position verschoben ist, wodurch die Innenseite und die Außenseite der metallischen, gewellten Folie in jeder Schicht des spiralförmig gewickelten, metallischen Wabenkörpers mit der metallischen, flachen Folie verbunden werden.

2. Verfahren nach Anspruch 1, wobei eine Lötfolie (5b-II) zwischen der Innenfläche (3-2) der metallischen, gewellten Folie (3) und der Außenfläche (2-1) der metallischen, flachen Folie an einer Position eingeführt wird, die im wesentlichen mit der Position identisch ist, an der die Lötfolie (5a-II) zwischen der Außenfläche der metallischen, gewellten Folie und der Innenfläche der metallischen, flachen Folie eingeführt wird, wodurch eine Verbindung zwischen der metallischen, gewellten Folie und der metallischen, flachen Folie gebildet wird.

3. Verfahren nach Anspruch 1 oder 2, wobei die Position zum Einführen der Lötfolie als eine gewünschte Position für jede Schicht in dem metallischen Wabenkörper vorab festgelegt wird.

4. Verfahren nach einem der Ansprüche 1 bis 3 mit den Schritten: in einer Festlegungseinrichtung vorab erfolgendes Festlegen einer Lötfolien-Einführungsstelle für jede Schicht in einer Spiralform in bezug auf einen Winkel vom Wicklungsanfangspunkt an der Wickelwelle (1), Erfassen eines Wickelwinkels zum Wickeln der metallischen Folie durch einen Winkeldetektor und Eingeben der erfaßten Signale in eine Recheneinheit, Vergleichen der erfaßten Signale mit von der Festlegungseinrichtung eingegebenen, vorab festgelegten Signalen, Senden der Signale zu einer Antriebssteuervorrichtung, wenn die erfaßten Signale mit den vorab festgelegten Signalen übereinstimmen, und ansprechend auf die Signale erfolgendes Antreiben einer ersten Lötfolien-Einführungsvorrichtung durch die Antriebssteuervorrichtung zum Einführen und Einwickeln der ersten Lötfolie (5a-I), und Antreiben einer zweiten Lötfolien-Einführungsvorrichtung durch die Antriebssteuervorrichtung zum Einführen und Einwickeln der zweiten Lötfolie (5b-II).

5. Verfahren nach einem der Ansprüche 1 bis 4, wobei die verbundenen Abschnitte als ein elektrischer Durchgang zwischen der metallischen, gewellten Folie (3) und der metallischen, flachen Folie (2) verwendet werden.

6. Vorrichtung zum Herstellen eines metallischen Wabenkörpers (4) zum Tragen eines Katalysatorstoffs, der für einen elektrisch geheizten Katalysator verwendbar ist, mit: einer Wickelwelle (1), auf die eine metallische, gewellte Folie (3) und eine metallische, flache Folie (2) gemeinsam gewickelt werden, wobei die metallische, flache Folie schichtförmig auf der metallischen, gewellten Folie angeordnet wird, um einen spiralförmigen, metallischen Wabenkörper zu bilden, einem Winkeldetektor zum Erfassen eines Winkels gegenüber dem Wicklungsanfangspunkt der Wickelwelle (1), einer Festlegungseinrichtung zum Festlegen einer Lötfolien-Einführungsstelle für jede Schicht in einer Spiralform in bezug auf einen Winkel gegenüber dem Wicklungsanfangspunkt der Wickelwelle, einer Recheneinheit zum Empfangen erfaßter Signale vom Winkeldetektor und vorab festgelegter Signale von der Festlegungseinrichtung und zum Vergleichen der erfaßten Signale mit den vorab festgelegten Signalen, einer ersten Lötfolien-Einführungsvorrichtung, die durch eine Antriebssteuervorrichtung ansprechend auf Signale von der Recheneinheit angetrieben wird, um eine erste Lötfolie (5b-II), die zuvor zu einer vorgegebenen Länge geschnitten wurde, an einer ersten Position, wo die metallische, gewellte Folie (3) in Kontakt mit der Außenfläche (2-1) der zuvor gewickelten metallischen, flachen Folie zu kommen beginnt, einzuführen und einzuwickeln und einer Einführungsvorrichtung für die zweite Lötfolie (5a-I), die durch die Antriebssteuervorrichtung ansprechend auf Signale von der Recheneinheit angetrieben wird, um eine zweite Lötfolie, die zuvor zu einer vorgegebenen Länge geschnitten wurde, zwischen der Außenfläche (3-1) der metallischen, gewellten Folie und der Innenfläche (2-2) der metallischen, flachen Folie an einer zweiten Position, die in Umfangsrichtung des gewickelten Körpers um einen Umfangsbogen, der kürzer als die vorgegebene Länge ist, gegenüber der ersten Position verschoben ist, einzuführen und einzuwickeln, wodurch die Innenseite und die Außenseite der metallischen, gewellten Folie in jeder Schicht des spiralförmig gewickelten, metallischen Wabenkörpers mit der metallischen, flachen Folie verbunden werden.

7. Vorrichtung nach Anspruch 6, wobei jede Lötfolien-Einführungsvorrichtung eine Haltevorrichtung (18) zum Halten einer abgeschnittenen Lötfolie und einen beweglichen Körper (21) zum drehbaren oder vertikal beweglichen Tragen der Haltevorrichtung aufweist.

## Revendications

1. Procédé de fabrication d'un corps en nid d'abeille métallique (4) destiné à supporter un catalyseur pouvant être utilisé dans un convertisseur catalytique du type à chauffage électrique, comportant les étapes consistant à : enrouler en spirale une feuille métallique plate (2) et une feuille ondulée métallique (3), avec la feuille métallique plate empilée sur la feuille métallique ondulée, sur un arbre d'enroulement (1); au cours de l'enroulement, insérer et envelopper une première feuille de brasage (5b), découpée au préalable à une longueur prédéterminée, dans une première position où la feuille ondulée métallique (3) commence à venir en contact avec la surface extérieure (2-1) de la feuille métallique plate enroulée au préalable, insérer et envelopper une deuxième feuille de brasage (5a), découpée au préalable à cette longueur prédéterminée entre la surface extérieure (3-1) de la feuille ondulée métallique et la surface intérieure (2-2) métallique plate dans une deuxième position décalée par rapport à ladite première position le long de la longueur circonférentielle du corps enroulé d'un arc circonférentiel plus court que ladite longueur prédéterminée, et relier ainsi les côtés intérieur et extérieur de la feuille ondulée métallique à la feuille métallique plate dans chaque couche du corps en nid d'abeille métallique enroulé en spirale.

2. Procédé selon la revendication 1, dans lequel une feuille de brasage (5b-II) est insérée entre la surface intérieure (3-2) de la feuille ondulée métallique (3) et la surface extérieure (2-1) de la feuille métallique plate dans une position sensiblement identique à la position où la feuille de brasage (5a-II) est insérée entre la surface extérieure de la feuille métallique ondulée et la surface intérieure de la feuille métallique plate, en formant ainsi une jonction entre la feuille métallique ondulée et la feuille métallique plate.

3. Procédé selon la revendication 1 ou 2, dans lequel la position d'insertion de la feuille de brasage est prédéterminée dans une position souhaitée pour chaque couche dans le corps en nid d'abeille métallique.

4. Procédé selon l'une quelconque des revendications 1 à 3, comportant les étapes consistant à préétablir dans un dispositif de mise en place un site d'insertion de feuille de brasage, pour chaque couche dans une forme de spirale, en termes, d'un angle par rapport au point de début d'enroulement dans l'arbre d'enroulement (1) ; détecter un angle d'enroulement, afin d'enrouler la feuille métallique, au moyen d'un détecteur d'angle et entrer les signaux détectés dans une unité de calcul; comparer les signaux détectés avec des signaux prédéterminés entrés au préalable dans le dispositif de mise en place; transmettre des signaux vers un dispositif de commande d'entraînement lorsque les signaux détectés coïncident avec les signaux prédéterminés; et, en réponse aux signaux, commander un dispositif d'insertion de première feuille de brasage par l'intermédiaire du dispositif de commande d'entraînement de façon à insérer et envelopper la première feuille de brasage (5a-I); et entraîner un dispositif d'insertion de deuxième feuille de brasage par l'intermédiaire du dispositif de commande d'entraînement afin d'insérer et envelopper la feuille de brasage (5b-II).

5. Procédé selon l'une quelconque des revendications 1 à 4, dans lequel les parties reliées sont utilisées en tant que passage électrique entre la feuille ondulée métallique (3) et la feuille métallique plate (2).

6. Appareil pour la fabrication d'un corps en nid d'abeille métallique (4) destiné à supporter un catalyseur pouvant être utilisé par un convertisseur catalytique du type à chauffage électrique, comportant : un arbre d'enroulement (1) sur lequel une feuille ondulée métallique (3) et une feuille métallique plate (2) sont enroulées, avec la feuille métallique plate empilée sur la feuille métallique ondulée, afin de former un corps en nid d'abeille métallique en forme de spirale; un détecteur d'angle destiné à détecter un angle par rapport au point de début d'enroulement de l'arbre d'enroulement (1); un dispositif de mise en place destiné à prédéterminer un site d'insertion de feuille de brasage, pour chaque couche en forme de spirale, en termes d'un angle par rapport au point de début d'enroulement de l'arbre d'enroulement; une unité de calcul destinée à recevoir des signaux détectés provenant du détecteur d'angle et des signaux prédéterminés provenant du dispositif de mise en place et comparer les signaux détectés avec les signaux prédéterminés; un dispositif d'insertion de première feuille de brasage entraîné par l'intermédiaire d'un dispositif de commande d'entraînement en réponse à des signaux provenant de l'unité de calcul de façon à insérer et envelopper une première feuille de brasage (5b-II), découpée au préalable à une longueur prédéterminée, au niveau d'une première position où la feuille ondulée métallique (3) commence à venir en contact avec la surface extérieure (2-1) de la feuille métallique plate enroulée au préalable; et un dispositif d'insertion de deuxième feuille de brasage (5aI) entraîné par l'intermédiaire du dispositif de commande d'entraînement en réponse à des signaux provenant de l'unité de calcul de façon à insérer et envelopper une deuxième feuille de brasage, découpée au préalable à la longueur prédéterminée, entre la surface extérieure (3-1) de la feuille métallique ondulée et la surface intérieure (2-2) de la feuille métallique plate au niveau d'une deuxième position décalée par rapport à ladite première position le long de la longueur circonférentielle du corps enroulé d'un arc circonférentiel plus court que ladite longueur prédéterminée, et relier ainsi les côtés intérieur et extérieur de la feuille métallique ondulée à la feuille métallique plate dans chaque couche du corps en nid d'abeille métallique enroulé en spirale.

7. Appareil selon la revendication 6, dans lequel chaque dispositif d'insertion de feuille de brasage comporte : un gabarit de maintien (18) destiné à maintenir une feuille de brasage découpée; et un corps mobile (21) destiné à supporter le gabarit de support de façon mobile verticalement ou en rotation.
